# EUROPEAN PATENT SPECIFICATION

(11) **EP 3 397 028 B1**
(45) Date of publication and mention of the grant of the patent: **25.11.2020**
(21) Application number: 18169056.1
(22) Date of filing: 24.04.2018
(51) Int. Cl.: H05B 45/37

(54) **LIGHTING SYSTEM AND RELATED METHOD OF OPERATING A LIGHTING SYSTEM**
BELEUCHTUNGSSYSTEM UND ZUGEHÖRIGES VERFAHREN ZUM BETRIEB EINES BELEUCHTUNGSSYSTEMS
SYSTÈME D'ÉCLAIRAGE ET PROCÉDÉ DE COMMANDE D'UN SYSTÈME D'ÉCLAIRAGE

(30) Priority: 27.04.2017 IT 201700045923
(43) Date of publication of application: 31.10.2018
(73) Proprietor: SITECO GmbH, 83301 Traunreut (DE)
(72) Inventor: PENGO, Ermes, 31038 Paese (Treviso) (IT); STIVAL, Davide, 31022 Preganziol (Treviso) (IT)
(74) Representative: Schmidt, Steffen

(56) References cited:
- US-A1- 2008 164 759
- US-A1- 2014 021 882
- US-B1- 8 340 933

## Description

### Field of the invention

The description refers to lighting systems.

### Description of the prior art

A lighting system typically comprises an electronic converter 10 and at least one lighting module 20. For example, the electronic converter 10 may comprise an AC/DC or DC/DC switching power supply that receives a power supply input signal (for example, from the power line or a battery) and outputs a regulated voltage *Vₒᵤₜ* or a regulated current *iₒᵤₜ*. A lighting module 20 comprises one or more light sources comprising, for example, at least one LED (Light Emitting Diode) or other solid-state lighting means, such as, for example, laser diodes.

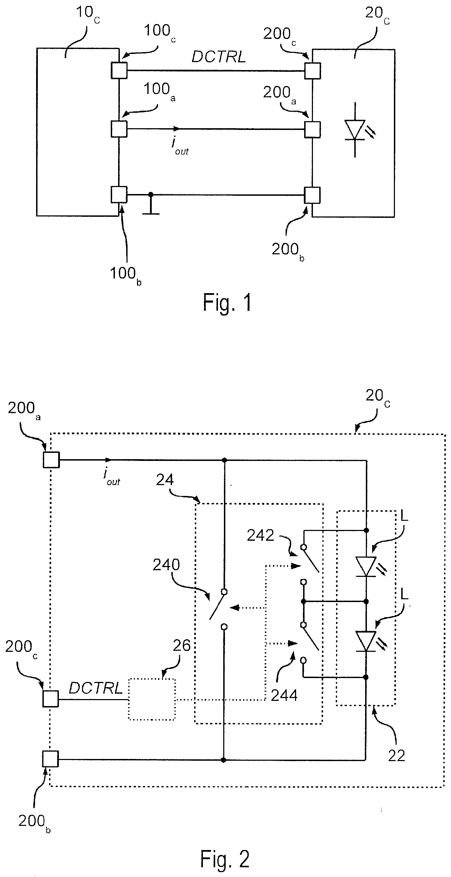

For example, Figure 1 shows a lighting system, in which the electronic converter 10 is a current generator 10_{C}, i.e. the electronic converter 10_{C} provides a regulated current *iₒᵤₜ* in output, by means of a positive terminal 100a and a negative terminal 100b, which represents a voltage reference.

The lighting module 20 is, therefore, a module 20_{C} configured to be powered by a regulated current *iₒᵤₜ*. For example, Figure 2 shows an example of a lighting module 20_{C}. In particular, the lighting module 20_{C} comprises a positive input terminal 200a and a negative input terminal 200b for connecting to the terminals 100a and 100b of the electronic converter 10_{C}. For example, the lighting module 20_{C} can be connected directly or through a cable to the electronic converter 10_{C}. Therefore, the terminal 200a is connected to the terminal 100a and the terminal 200b is connected to the terminal 100b, and the lighting module 20 therefore receives the current *iₒᵤₜ.*

For example, the lighting module 20_{C} may comprise a chain or string of LEDs (LED chain or string) 22, in which a plurality of LEDs L is connected in series between the terminals 200a and 200b. In general, the lighting module 20_{C} may also comprise a plurality of LED strings 22.

In the example considered, the lighting module 20_{C} comprises means 24 configured to control the flow of current through the LEDs L, which allows adjustment of the brightness of the light emitted by the LEDs L, the so-called *dimming* function.

For example, in Figure 2, these means 24 are implemented with one or more electronic switches 240, 242 and 244. For example, the switch 240 can be connected (for example, directly) between the terminals 200a and 200b and thus allows short-circuiting of all the LEDs L of the lighting module 20_{C}, controlling, in this way, the overall brightness of the lighting module 20_{C}. Instead, the switches 242 and 244 may be connected in parallel with the respective LEDs L and they therefore enable a corresponding LED L to be shortcircuited, thereby individually controlling the brightness of the respective LED.

In the example considered, the lighting module 20_{C} therefore comprises one or more additional terminals 200c for receiving one or more dimming control signals *DCTRL.* In the simplest case, the received signal can be used to directly drive the means 24. For example, a pulse width modulated (PWM) signal could be used to directly drive one of the switches 240, 242 or 244. Typically, the PWM frequency is between 100 Hz and 2 kHz.

In general, the lighting module 20 C may also comprise a control circuit 26 that receives the dimming control signal *DCTRL* and generates the signals for the means 24, for example, the switches 240, 242 and 244 as a function of the dimming control signal *DCTRL.* For example, the control circuit 26 can drive one or more of the switches 240, 242 or 244 with a PWM signal, in which the working cycle of the PWM signal changes as a function of the dimming control signal *DCTRL.*

Therefore, in general, the dimming control signal *DCTRL* can be any analog or digital signal capable of transmitting data that identify the required brightness of the lighting module 20_{C} and/or of the strings of LEDs 22 and/or of the individual LEDs L of the lighting module 20_{C}. For example, in various embodiments, the dimming control signal *DCTRL* is in accordance with the *Digital Addressable Lighting Interface* (DALI) protocol.

For example, in Figure 1, the electronic converter 10_{C} comprises a terminal 100c that supplies the dimming control signal(s) *DCTRL* for the lighting module 20_{C}.

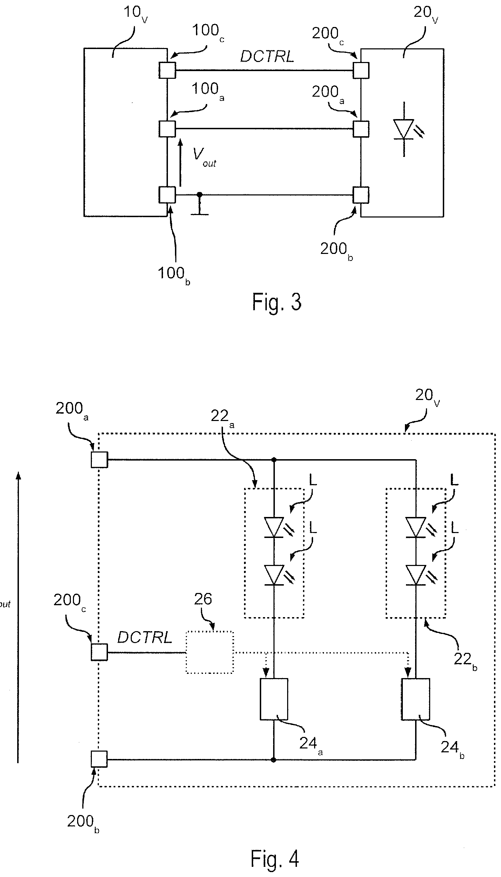

Instead, Figure 3 shows a lighting system, in which the electronic converter is a voltage generator 10_{V} and, similarly, the lighting module 20 is a module 20_{V} configured to be powered by a voltage.

Therefore, in Figure 3, the electronic converter 10_{V} supplies a regulated voltage *Vₒᵤₜ* at the output, by means of a positive terminal 100a and a negative terminal 100b, which again represents a voltage reference.

Figure 4 shows an example of a lighting module 20_{V} configured to be powered by a regulated voltage *Vₒᵤₜ*. In particular, the lighting module 20_{V} comprises a positive input terminal 200a and a negative input terminal 200b for connecting to the terminals 100a and 100b of the electronic converter 10_{V}. Also in this case, the lighting module 20V can be connected directly or through a cable to the electronic converter 10_{V}. Therefore, the terminal 200a is connected to the terminal 100a and the terminal 200b is connected to the terminal 100b, and the lighting module 20 therefore receives the voltage *Vₒᵤₜ*.

In the example considered, the lighting module 20_{V} is an LED module comprising a string of LEDs 22 connected between the terminals 200a and 200b. In general, the LEDs L can also be divided over several branches connected in parallel. For example, as shown in Figure 4, the module 20_{V} may comprise a first LED string 22a comprising a first set of LEDs L connected in series and a second string of LEDs 22b comprising a second set of LEDs L connected in series.

Since the lighting module 20_{V} is supplied with a voltage, the lighting module 20_{V} also comprises means 24 for regulating the current flowing through each string of LEDs 22. For example, in Figure 4, the first LED string 22a and a first current regulator 24a are connected (for example, directly) in series between the terminals 200a and 200b, and the second string of LEDs 22b and a second current regulator 24b are connected (for example, directly) in series between the terminals 200a and 200b. Therefore, in the example considered, the strings 22a and 22b are powered by means of a common voltage (*Vₒᵤₜ*).

In the simplest case, the current regulator 24 can be a resistor or a linear current regulator. The current regulator 24 can also be implemented with current mirrors or with a switched mode current source, typically comprising an inductor and an electronic switch.

In this case as well, the lighting module 20_{V} can comprise one or more additional terminals 200c for receiving one or more dimming control signals *DCTRL.* In general, also in this case, the received signal can be used for directly driving the means 24. For example, a pulse width modulated (PWM) signal could be used to turn a respective current regulator on or off. Furthermore, the lighting module 20_{V} may comprise a control circuit 26 that receives the dimming control signal *DCTRL* and generates the signals for the means 24 as a function of the dimming control signal *DCTRL.* For example, the control circuit 26 can turn the current regulators 24 on or off with a PWM signal or set the reference current of a linear or switching current regulator. Therefore, also in this case, the dimming control signal *DCTRL* can be any analog or digital signal capable of transmitting data that identify the required brightness of the lighting module 20_{V} and/or of the strings of LEDs 22 and/or of the individual LEDs L of the lighting module 20_{V}. For example, in various embodiments, the dimming control signal *DCTRL* is in accordance with the *Digital Addressable Lighting Interface* (DALI) protocol.

Consequently, regardless of whether the power supply is current or voltage, a lighting module 20 has associated a specific maximum power supply *P_{Max},* which, for example, depends on the type and number of LED Ls that are included in the lighting module 20. The electronic converter 10 should, therefore, be able to provide at least the maximum power supply *P_{Max}*. Furthermore, the actual power supply (average) *P* may be less than the maximum power supply *P_{Max}* reducing (by the means 24) the current flowing through the LEDs L of the lighting module 20.

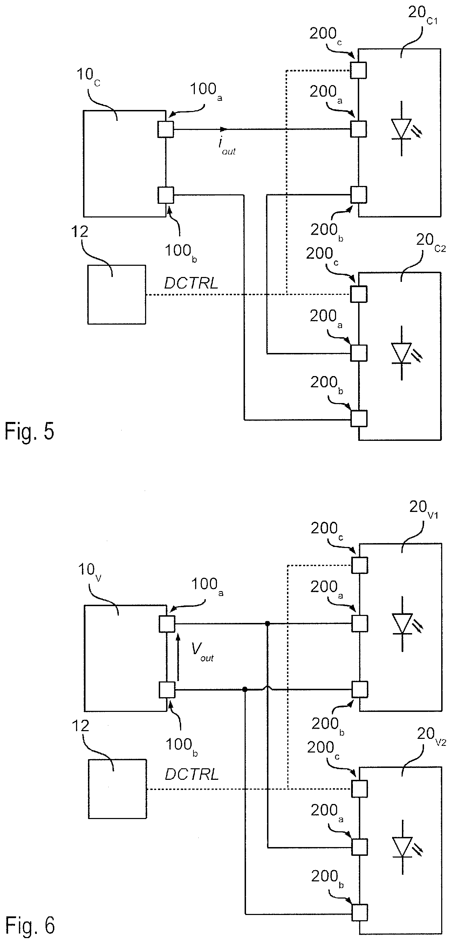

Figures 5 and 6 show two possible solutions for supplying power to a plurality of lighting modules.

In particular, Figure 5 shows a solution, in which an electronic converter 10_{C} supplies a plurality of lighting modules 20_{C}, for example two modules 20_{C1} and 20_{C2}. In particular, in the case in which the lighting modules 20_{C} are supplied with a regulated current, the lighting modules 20_{C} are typically connected in series. Therefore, the terminal 200a of the first lighting module 20_{C1} is connected (for example, directly) to the terminal 100a of the electronic converter 10_{C}, the terminal 200a of the second lighting module 20_{C2} is connected (for example, directly) to the terminal 200b of the first lighting module 20_{C1} and the terminal 200b of the second lighting module 20_{C2} is connected (for example, directly) to the terminal 100b of the electronic converter 10_{C}.

In the example considered, a control circuit 12 is used for generating the dimming control signals that are sent to the terminals 200c of the lighting modules 20_{C}. In general, the control circuit 12 can also be integrated in the electronic converter 10_{C}.

Instead, Figure 6 shows a solution in which an electronic converter 10_{V} supplies power to a plurality of lighting modules 20_{V}, for example, two modules 20_{V1} and 20_{V2}. In particular, in the case in which the lighting modules 20_{V} are supplied with a regulated voltage, the lighting modules 20_{V} are typically connected in parallel. Therefore, the terminal 200a of the first lighting module 20_{C1} and the terminal 200a of the second lighting module 20_{C2} are connected (for example, directly) to the terminal 100a of the electronic converter 10_{C}, and the terminal 200b of the first lighting module 20_{C1} and the terminal 200b of the second lighting module 20_{C2} are connected (for example, directly) to the terminal 100b of the electronic converter 10_{C}. Also in this case, a control circuit 12 is provided, which generates the dimming control signals that are sent to the terminals 200c of the lighting modules 20_{C}.

Accordingly, in these solutions each lighting module 20 has associated a respective maximum power supply *P_{Max}* and the electronic converter 10 should be able to provide a power supply that corresponds to at least the sum of the maximum power supply capacities of the various lighting modules 20 connected to the electronic converter.

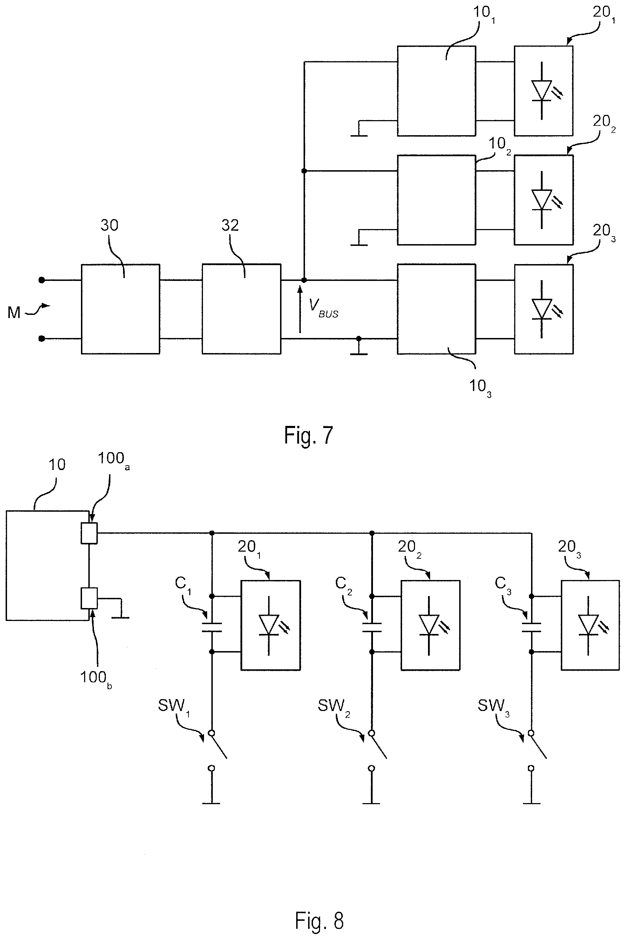

Figures 7 and 8 illustrate additional solutions that can be used to supply power to a plurality of lighting modules 20.

In particular, Figure 7 shows an example in which each lighting module 20 (i.e. 20_{V} or 20_{C}) is supplied by means of a respective electronic converter 10. In particular, in the example considered, three lighting modules 20₁, 20₂ and 20₃ are shown, which are supplied by means of three generators 10₁, 10₂ and 10₃, such as "buck" converters. In general, the electronic converters 10 can provide a regulated voltage or, preferably, a regulated current.

Therefore, each converter 10 can individually control the operation of the respective lighting module 20. For example, in this solution, each converter 10 can carry out a dimming operation by adjusting the average current that passes through the lighting module 20, for example, by adjusting the amplitude of the current (in the case in which the converters 10 are current generators) and/or by switching on/off the respective lighting module 20, for example, by using a pulse width modulation (PWM) signal. Typically, the frequency of the PWM (for example, between 100 Hz and 2 kHz) is low with respect to the switching frequency of the electronic converter 10 (for example, between 10 and 100 kHz).

In general, the electronic converters 10₁, 10₂ and 10₃ can also use the same rectifier circuit 30 and/or an additional electronic converter 32, such as a converter with correction of the power factor, can be used to provide the power supply, such as, for example, a regulated voltage *V_{BUS}*, to the electronic converters 10₁, 10₂ and 10₃.

This solution has the advantage that each electronic converter 10 can have a low power, i.e. that of the respective lighting module 20. Furthermore, malfunctioning of a single lighting module 20 or electronic converter 10 does not typically affect the operation of the other lighting modules 20 and electronic converters 10.

Instead, Figure 8 shows a solution in which the lighting modules 20, for example, again three lighting modules 20₁, 20₂ and 20₃, are selectively connected to the same electronic converter 10, i.e. the lighting modules 20 are selectively supplied with power. For example, a solution of this type is described in the American patent application US 2010/0295472 A1 or in the Italian patent application IT102016000080749, the contents of which are incorporated herein by reference.

In particular, in this solution, the electronic converter 10 supplies several branches, one for each lighting module 20. In particular, with each branch is associated a respective lighting module 20 and an electronic switch SW. Therefore, for the exemplary case of three lighting modules 20₁, 20₂ and 20₃, there are three electronic switches SW₁, SW₂ and SW₃. These switches SW are controlled in such a way as to selectively connect the lighting modules 20 to the electronic converter 10. In general, each lighting module 20 may also have associated a capacitor (C₁, C₂ and C₃), which stabilizes the power supplied to the lighting module 20.

In particular, if the converter 10 is a current generator (see document US 2010/0295472 A1), only one of the branches is connected to the electronic converter 10, i.e. only one of the switches SW₁, SW₂ and SW₃ is closed during a certain time interval. Therefore, by sequentially activating the switches SW, the lighting modules 20₁, 20₂ and 20₃ can be supplied alternately. Typically, the converter 10 also has associated, in this case, a protection circuit configured to protect the electronic converter in the event that no lighting module 20 is connected to the output of the electronic converter 10.

On the other hand, if the converter 10 is a voltage generator (see document IT102016000080749), a plurality of lighting modules 20 can also be connected simultaneously to the electronic converter 10 (respecting the maximum power capacity that the electronic converter 10 can provide).

For example, in the solution shown in Figure 8, the dimming operation can be performed by adjusting the duration during which each lighting module 20 is connected to the electronic converter 10. This solution, therefore, has the advantage that only a single electronic converter is required 10. However, this converter 10 must be able to supply power to all the lighting modules 20. Furthermore, by increasing the number of lighting modules, the operating time of each lighting module may become too short.

Accordingly, the present invention relates to a lighting system according to the preamble of Claim 1, which is known, e.g. from document US 2008/164759 A1.

### Object and summary

The present description aims to provide solutions for powering a plurality of lighting modules.

According to various embodiments, this object is achieved thanks to a lighting system having the characteristics referred to in the following claims. The claims also concern a relative method for operating a lighting system.

The claims form an integral part of the technical disclosure provided here in relation to the invention.

As mentioned previously, various forms of the present description relate to a lighting system. In particular, in various embodiments, the lighting system comprises a plurality of electronic converters and a plurality of lighting modules.

In various embodiments, the lighting system further comprises switching means configured for connecting the lighting modules to the electronic converters. In particular, the switching means allow at least two switching states. In the first switching state, at least one lighting module is connected to each electronic converter. Instead, in the second switching state, at least one electronic converter is disconnected, and the lighting module(s) connected during the first switching state to this at least one electronic converter are connected to the other electronic converters.

In various embodiments, the lighting system also comprises a control circuit configured to detect one or more signals indicative of the supply powers required/requested by the lighting modules. In this case, the control circuit can drive the switching of the switching means to activate the first or second switching state according to the supply powers required by the lighting modules.

For example, in various embodiments, the control circuit can determine the sum of the supply powers required by the lighting modules and, in the event that the sum is greater than a first threshold, activate the first switching state. On the other hand, if the sum is less than a second threshold, the control circuit can activate the second switching state.

As a result, the efficiency of the system is increased, since, instead of operating multiple electronic converters at a low efficiency, a smaller number of electronic converters are used that operate at a higher efficiency.

For example, in various embodiments, the power supply required by the lighting modules may vary as a result of a dimming operation. In this case, one or more lighting modules may comprise adjustment means configured to vary the supply power required by the respective lighting module as a function of one or more dimming control signals. For example, the adjustment means can be configured to adjust the amplitude of the current flowing through the respective lighting module as a function of the dimming control signals. Alternatively or additionally, the adjustment means may modulate the current flowing through the respective lighting module with a pulse width modulation. In this case, the modulations can also be synchronized in such a way as to sequentially turn on the lighting modules connected to each electronic converter.

In various embodiments, the control circuit can, therefore, detect the power supply required by the lighting modules by monitoring these dimming control signals.

### Brief description of the attached representations

Embodiments will be now described, purely by way of non-limiting example, with reference to the attached representations, wherein:
- Figures 1 to 8 have already been described previously,
- Figure 9 shows a first embodiment of a lighting system according to the present description;
- Figure 10 shows a second embodiment of a lighting system according to the present description;
- Figures 11a and 11b illustrate possible controls in the systems of Figures 9 and 10; and
- Figures 12 to 20 show additional embodiments of a lighting system according to the present description;

### Detailed description of embodiments

In the following description various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment.

The references used here are only for convenience and do not therefore define the field of protection or the scope of the embodiments.

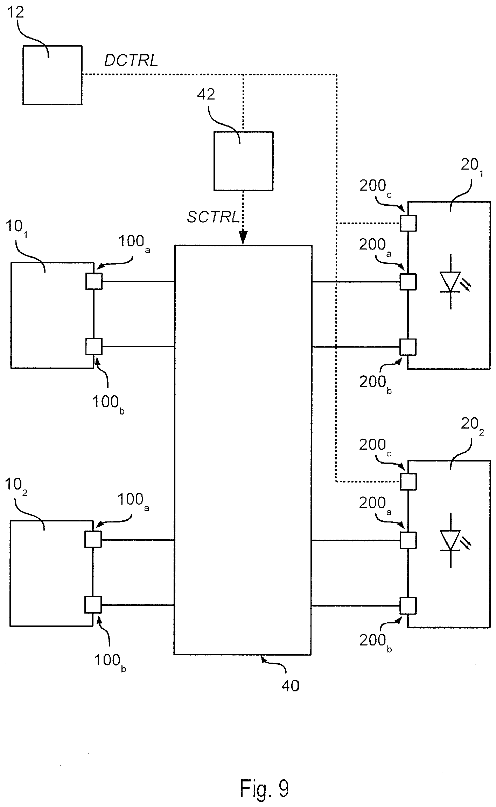

In the following Figures 9 to 20 the parts, elements or components that have already been described with reference to Figures 1 to 8 are indicated with the same references used previously in these Figures; the description of these elements previously described will not be repeated again in order not to overload the present detailed description.

As mentioned previously, the present description provides solutions for powering a plurality of lighting modules 20.

In particular, the inventors have observed that in the solutions described with reference to Figures 5 to 8, there are often situations in which the actual load does not exploit the maximum power capacity of the electronic converter(s) 10. In fact, as previously described, the lighting modules 20 can be operated in the dimming mode, in which the power supply is less than the maximum power. However, this implies that the electronic converter 10 often operates at a lower power relative to the maximum power, which normally also lowers the efficiency of the electronic converter 10, i.e. the losses increase.

Figure 9 shows a first embodiment of a lighting system capable of overcoming such problems.

In particular, in the embodiment, several electronic converters 10 and several lighting modules 20 are provided. For example, in the embodiment considered two electronic converters 10₁ and 10₂ and two lighting modules 20₁ and 20₂ are shown. Therefore, in the embodiment considered, the number of lighting modules 20 corresponds to the number of electronic converters 10.

Furthermore, the system comprises switching means 40 connected between the electronic converters 10 and the lighting modules 20. These switching means 40 are configured to selectively connect the lighting modules 20 to the electronic converters 10.

For example, in the embodiment considered, the switching means 40 are configured for:
a) connecting each lighting module 20 to a respective electronic converter 10, for example, the lighting module 20₁ to the electronic converter 10₁ and the lighting module 20₂ to the electronic converter 10₂; or
b) connecting all the lighting modules 20 to the same electronic converter 10, for example to the electronic converter 10₁.

Therefore, the first case a) corresponds substantially to the connection described with reference to Figure 7, in which each electronic converter 10 supplies a respective lighting module 20. Therefore, in various embodiments, the first electronic converter 10₁ is configured to provide a power supply that corresponds to the maximum power supply of the lighting module 20₁. Similarly, the second electronic converter 10₂ can be configured to provide a power supply that corresponds to the maximum power supply of the lighting module 20₂.

Instead, according to the type of control adopted, the second case b) corresponds to the connection described with reference to Figures 5 and 6, in which a single electronic converter 10 supplies a plurality of lighting modules 20.

However, in various embodiments, the electronic converter 10₁ is not able to provide a power supply that corresponds to the sum of the maximum power supply capacities of the lighting modules 20₁ and 20₂. Therefore, in various embodiments, this mode is only activated when the lighting modules 20₁ and 20₂ are operated with the dimming operation, and the sum of the supply powers currently required by lighting modules 20₁ and 20₂ is less than or equal to the power supply that the electronic converter 10₁ is able to supply. In this case, the second electronic converter 10₂ is, therefore, unused and can be switched off or put into a low-power mode (stand-by). As a result, the efficiency of the system is increased, since, instead of operating two electronic converters at a low efficiency, a single converter 10₁ is used that operates with a greater efficiency.

Consequently, in the embodiment considered, the lighting modules 20 allow the brightness to be adjusted.

For example, as described with reference to Figures 2 and 4, the lighting modules 20, such as, for example, LED lighting modules, can comprise a terminal 200c for receiving at least one dimming control signal *DCTRL,* which in general can be an analog or digital signal. Therefore, the relative description applies fully.

For example, in the embodiment considered, the dimming control signal(s) *DCTRL* are generated by means of a dimming control circuit 12, such as for example an analog and/or digital circuit, such as, for example, a microprocessor programmed by code. For example, in various embodiments, a single BUS connection and a communication protocol (e.g. DALI) can be used, in which each lighting module 20 has associated a respective address. Therefore, in this case, each lighting module 20 may comprise a control circuit 26 that generates the control signal(s) for the respective adjustment means 24 as a function of the dimming control signal *DCTRL,* which includes its identifier.

In various embodiments, the control circuit 12 can also directly generate the control signals for the adjustment means 24 of the lighting modules 20.

In various embodiments, the system also comprises a control circuit 42, such as, for example, an analog and/or digital circuit, such as for example a microprocessor programmed by means of software code, which generates one or more control signals *SCTRL* for the switching means 40 as a function of the power supply required by the lighting modules 20. In general, the circuits 12 and 42 may also be implemented within the same control circuit, for example, the microprocessor itself.

In general, the control circuit 42 can, therefore, monitor one or more signals indicative of the supply powers *P20₁* and *P20₂* required by the lighting modules 20₁ and 20₂, such as, for example:
- in the case in which the electronic converters 10 provide a regulated voltage, the power supply current that passes through each lighting module 20, for example, by measuring the current supplied by the electronic converters 10 through the terminals 100a and 100b, or the power supply current applied to the terminals 200a and 200b of the lighting modules 20;
- in the case in which the electronic converters 10 provide a regulated current, the power supply voltage that is created at the ends of each lighting module 20, for example, by measuring the voltage between the terminals 100a and 100b of the electronic converters 10, or the voltage between the terminals 200a and 200b of the lighting modules 20;
- the dimming signal(s) *DCTRL.*

Therefore, in various embodiments, the control circuit 42 is configured for:
- in the case in which the sum of the required supply powers is higher than the maximum power supply that the electronic converter 10₁ is able to provide, or in general a threshold value, setting the control signal(s) *SCTRL* so as to activate operating mode a) (individual power supply of the lighting modules 20); and
- in the case in which the sum of the required supply powers is less than or equal to the maximum power supply that the electronic converter 10₁ is able to supply, or in general a threshold value, setting the control signal (s) *SCTRL* so as to activate operating mode b) (power supply of the lighting modules 20 by means of a single electronic converter).

In various embodiments, switching between the two operating modes can also occur with a hysteresis, i.e. the control circuit 42 can use an upper threshold for activating mode a) and a different lower threshold for activating mode b).

In general, the specific implementation of the means 40 depends on the number of electronic converters 10, on the number of lighting modules 20, and on the type of power supply used (regulated voltage or current).

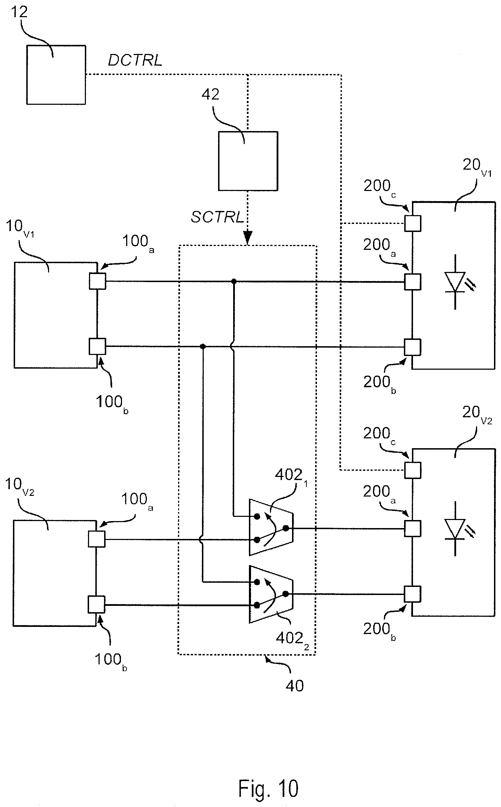

For example, Figure 10 shows an embodiment in which each electronic converter 10 supplies a regulated voltage, such as, for example, 12, 24 or 48 VCC. For example, in the embodiment considered two electronic converters 10ᵥ₁ and 10v₂ and two lighting modules 20ᵥ₁ and 20ᵥ₂ are shown.

In particular, in the embodiment considered, the terminals 200a and 200b of the first lighting module 20_{V1} are connected (for example, directly) to the terminals 100a and 100b of the first electronic converter 10_{V1}. Instead, the switching means 40 comprise two multiplexers 402₁ and 402₂ configured to respectively connect the terminals 200a and 200b of the second lighting module 20_{V2} to the terminals 100a and 100b of the first electronic converter 10_{V1} or of the second electronic converter 10_{V2}.

Therefore, in the embodiment considered, the control circuit 42 drives the multiplexers 402₁ and 402₂ so as to:
a) connect each lighting module 20_{V1} and 20_{V2} to a respective electronic converter 10_{V1} and 10_{V2}; or
b) connect both lighting modules 20_{V1} and 20_{V2} in parallel to the first electronic converter 10_{V1}.

In particular, as explained previously, the control circuit 42 makes the selection on the basis of the supply powers *P20₁* and *P20₂* currently and/or on average required by lighting modules 20_{V1} and 20_{V2}.

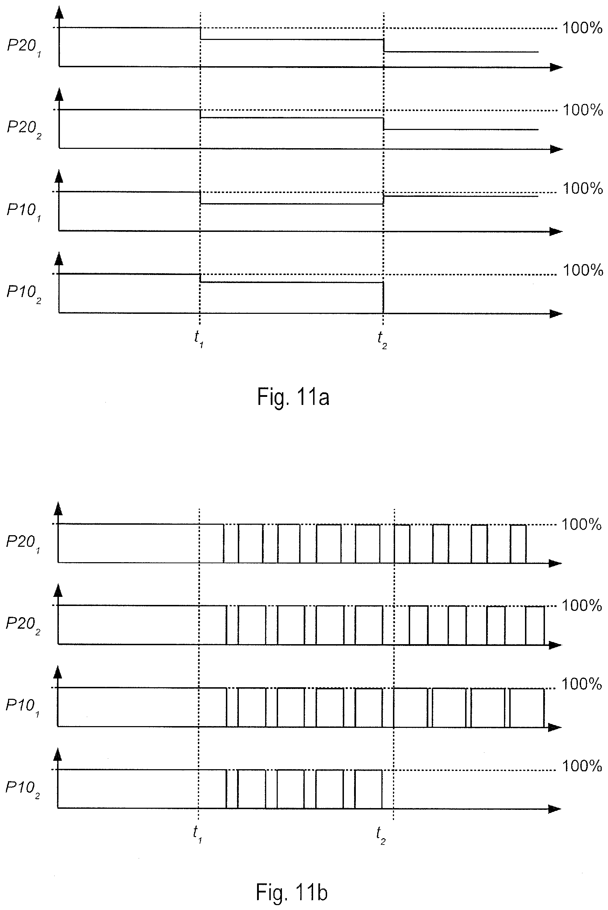

In particular, Figure 11a shows an example for the supply powers *P20₁* and *P20₂* required by the lighting modules 20_{V1} and 20_{V2}, and the supply powers *P10₁ and P10₂* supplied by the electronic converters 10_{V1} and 10ᵥ₂.

In particular, in the embodiment considered, the lighting modules 20_{V1} and 20_{V2} implement the dimming function by lowering the amplitude of the current flowing through its own current regulator 24. In this case, the lighting module 20_{V} is then configured to adjust the amplitude of the current passing through the lighting module and hence the instantaneous value of the required power supply.

For example, initially both lighting modules 20_{V1} and 20_{V2} require the maximum power supply and are therefore supplied individually. At a time *t₁*, the current passing through the lighting modules 20_{V1} and 20_{V2} is lowered, for example, the supply powers, *P10₁* and *P10₂* are reduced to 70% and 80%. However, the sum of the supply powers is greater than that which the electronic converter 10_{V1} can provide. At a time *t₂*, the current passing through the lighting modules 20_{V1} and 20_{V2} is lowered even further, for example, the supply powers, *P10₁* and *P10₂* are reduced to 40% and 50%. Therefore, the sum of the supply powers is now lower than that which the electronic converter 10_{V1} can provide, and the control circuit 42 drives the switching means 40 in such a way that both the lighting modules 20_{V1} and 20_{V2} are supplied by means of the electronic converter 10_{V1}.

Instead, Figure 11b shows the case in which the lighting modules 20_{V1} and 20_{V2} implement the dimming function by means of a PWM, i.e. by switching on and switching off the light sources of the lighting module.

Also in this case, the supply powers *P10₁* and *P10₂* are reduced, on average, to 70% and 80% at a time *t₁* and to 40% and 50% at a time *t₂*. Therefore, up to the time *t₂*, the lighting modules 20_{V1} and 20_{V2} are supplied separately and can independently perform the dimming function. Instead, at least from the time *t₂*, i.e. from the moment that the lighting modules 20₁ and 20₂ are powered by the same electronic converter 10_{V1}, the dimming function of the lighting modules 20_{V1} and 20_{V2} should be synchronized, so as to switch on only one of the lighting modules 20_{V1} and 20_{V2} at a time (similar to that described with reference to Figure 8). In this way, it can be guaranteed that the sum of the instantaneous supply powers *P20₁* and *P20₂* required by the lighting modules 20_{V1} and 20_{V2} does not exceed the maximum power supply that the electronic converter 10_{V1} is able to supply. In general, the synchronization can be controlled by means of the control circuit 12 or 42. For example, the control circuit 12 could directly generate PWM signals usable for driving the dimming function of the lighting modules 20_{V1} and 20_{V2}.

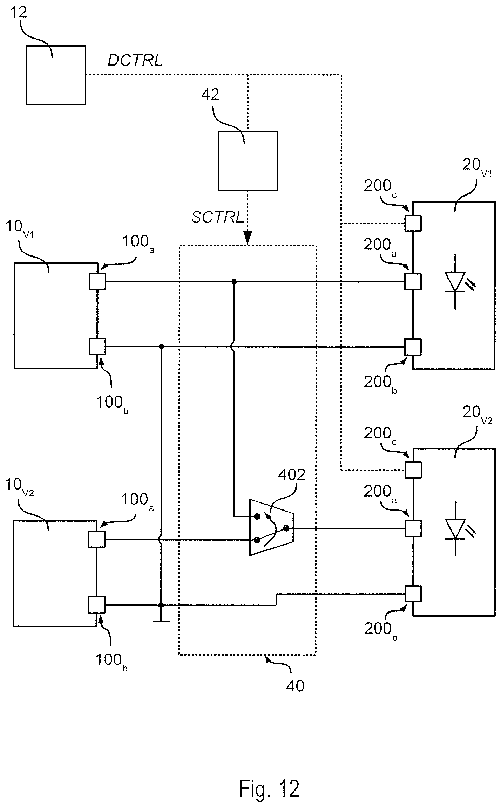

Figure 12 shows a second embodiment. In particular, in this case, the electronic converters 10_{V1} and 10_{V2} use the same voltage reference, i.e. the terminal 100b of the first electronic converter 10_{V1} is connected (for example, directly) to the terminal 100b of the second electronic converter 10_{V2}. For example, similar to Figure 7, this connection is typically already provided in the case in which the electronic converters 10_{V1} and 10_{V2} are non-isolated converters which are fed through a common rectifier circuit 30 and possibly an electronic converter 32, such as, for example, a converter with correction of the power factor that supplies a regulated voltage *V_{BUS}.*

In the embodiment considered, the second multiplexer is therefore superfluous. In particular, in the embodiment considered, the terminals 200a and 200b of the first lighting module 20_{V1} are connected (for example, directly) to the terminals 100a and 100b of the first electronic converter 10_{V1}. The terminal 200b of the second lighting module 20_{V2} is connected (for example, directly) to the terminal 100b of the second electronic converter 10_{V2}, and consequently to the terminal 100b of the first electronic converter 10_{V1}. Instead, the switching means 40 comprise one multiplexer 402 configured to connect the terminal 200a of the second lighting module 20_{V2} to the terminal 100a of the first electronic converter 10_{V1} or of the second electronic converter 10_{V2}.

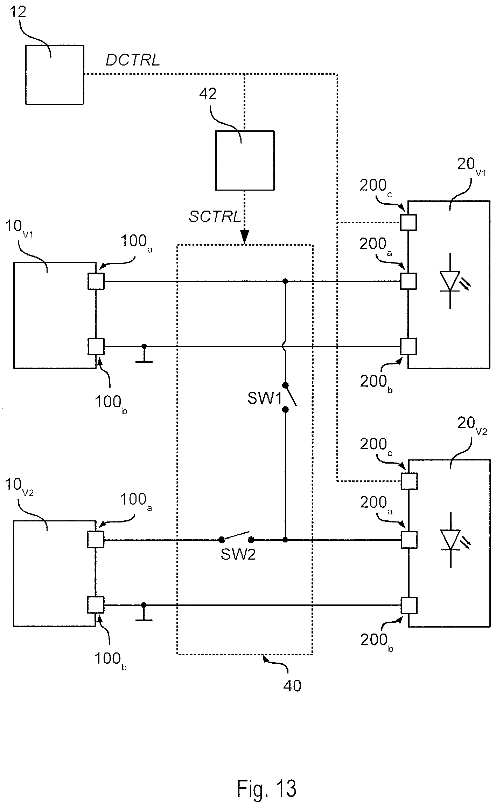

Figure 13 shows a possible implementation of the multiplexer 402 with two electronic switches SW1 and SW2. In particular, the first electronic switch SW1 is connected between the terminal 200a of the second lighting module 20_{V2} and the terminal 100a of the first electronic converter 10_{V1}, and the second electronic switch SW2 is connected between the terminal 200a of the second lighting module 20_{V2} and the terminal 100a of the second electronic converter 10_{V2}.

In general, the solution described here can also be applied in the case in which the electronic converters 10 provide a regulated current.

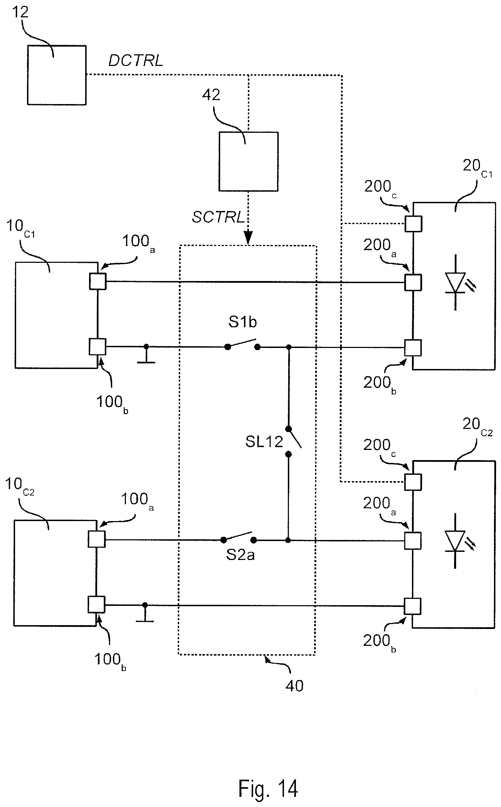

For example, Figure 14 shows an embodiment comprising two lighting modules 20_{C1} and 20_{C2}, and two electronic converters 10_{C1} and 10_{C2}, which use the same voltage reference.

In particular, in the embodiment considered, the terminal 200a of the first lighting module 20_{C1} is connected (for example, directly) to the terminal 100a of the first electronic converter 10_{C1} and the terminal 200b of the second lighting module 20_{C2} is connected (for example, directly) to the terminal 100b of the second electronic converter 10_{C2}. A first electronic switch S1b is connected between the terminal 200b of the first lighting module 20_{C1} and the terminal 100b of the first electronic converter 10_{C1}, and a second electronic switch S2a is connected between the terminal 200a of the second lighting module 20_{C2} and the terminal 100a of the second electronic converter 10_{C2}. Finally, a third electronic switch SL12 is connected between the terminal 200b of the first lighting module 20_{C1} and the terminal 200a of the second lighting module 20_{C2}. In general, similar to that described above, the switches S1b and SL12, or alternatively, the switches S2a and SL12, can be part of a multiplexer.

Therefore, in the embodiment considered, the control circuit 42 can drive the switches S1b, S2a and SL12 so as to:
a) connect each lighting module 20_{C1} and 20_{C2} to a respective electronic converter 10_{C1} and 10_{C2} (S1b and S2a closed, SL12 open); or
b) connect both lighting modules 20_{C1} and 20_{C2} in series to the first electronic converter 10_{C1} (S1b and S2a open, SL12 closed).

Therefore, the case a) corresponds substantially to that described with reference to Figure 7 and the case b) corresponds substantially to the connection described with reference to Figure 5.

Again, in this case, the control circuit 42 makes the selection based on the supply powers *P20₁* and *P20₂* required by the lighting modules 20_{C1} and 20_{C2}. Furthermore, similar to that described with reference to Figures 11a and 11b, the lighting modules 20_{C1} and 20_{C2} can modulate the amplitude of the power supply required (for example, by switching off certain LEDs) or can modulate the power supply required with a PWM. In the second case, the dimming function is preferably synchronized.

In general, the electronic switches S1b, S2a and SL12 can also be used for other purposes, for example, in cases of malfunction to disconnect one or more of the lighting modules 20_{C1} and 20_{C2}. In fact, the control circuit 42 can drive the electronic switches S1, S2 and SL1 at least with the following switching states:

| S1b | S2a | SL12 | powered modules | |
|---|---|---|---|---|
| | | | 10_{C1} | 10_{C2} |
| 1 | 1 | 0 | 20_{C1} | 20_{C2} |
| 0 | 0 | 1 | 20_{C1},20_{C2} | - |
| 0 | 1 | 0 | - | 20_{C2} |
| 1 | 0 | 0 | 20_{C1} | |
| 0 | 0 | 0 | - | - |

wherein "1" indicates that the switch is closed and "0" indicates that the switch is open, i.e.:
In various embodiments, the lighting modules 20_{C1} and 20_{C2} can also be connected in parallel to the electronic converter 10_{C1}.

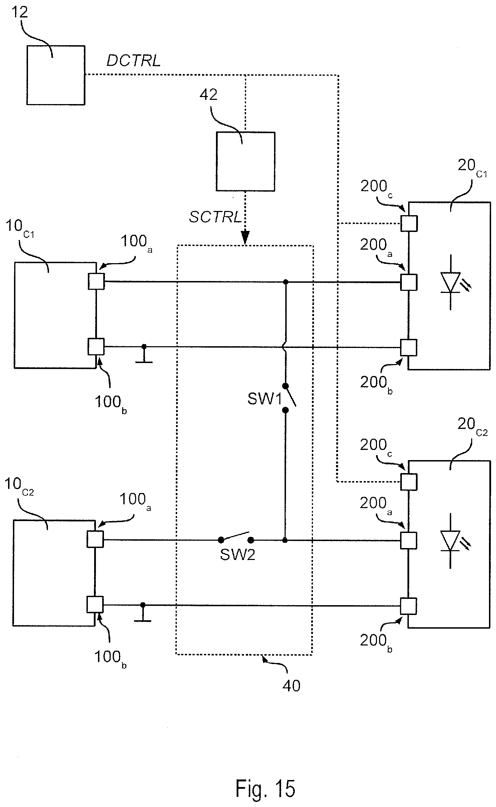

For example, Figure 15 shows an embodiment in which the terminals 200a and 200b of the first lighting module 20_{C1} are connected (for example, directly) to the terminals 100a and 100b of the first electronic converter 10_{C1}. Similarly, the terminal 200b of the second lighting module 20_{C2} is connected (for example, directly) to the terminal 100b of the second electronic converter 10_{C2}, and consequently to the terminal 100b of the first electronic converter 10_{C1}. A first electronic switch Sw1 is connected between the terminal 200a of the second lighting module 20_{C2} and the terminal 100a of the first electronic converter 10_{C1}, and the second electronic switch SW2 is connected between the terminal 200a of the second lighting module 20_{C2} and the terminal 100a of the second electronic converter 10_{C2}.

Therefore, in the embodiment considered, the control circuit 42 can drive the switches SW1 and SW2 so as to:
a) connect each lighting module 20_{C1} and 20_{C2} to a respective electronic converter 10_{C1} and 10_{C2} (SW1 open and SW2 closed); or
b) connect both lighting modules 20_{C1} and 20_{C2} in parallel to the first electronic converter 10_{C1} (SW1 closed and SW2 open).

Therefore, the case b) corresponds substantially to the connection described with reference to Figure 8, in which the lighting modules 20 and the control circuit 12 are configured to implement the dimming function by sequentially switching on the lighting modules 20_{C1} and 20_{C2}.

Consequently, in the embodiments described with reference to Figures 9 to 15, the switching means 40 are configured to selectively connect:
a) each lighting module 20₁ and 20₂ to a respective electronic converter 10₁ and 10₂; or
b) connect both lighting modules 20₁ and 20₂ to the first electronic converter 10₁.

Furthermore, the control circuit 42 monitors signals identifying the supply powers *P20₁* and *P20₂* required by the lighting modules 20₁ and 20₂ and drives the switching means 40 as a function of these signals. In particular,
a) when the sum of the supply powers *P20₁* and *P20₂* is higher than a first threshold (selected on the basis of the power supply that the first electronic converter 10₁ is able to provide), the control circuit 42 drives the switching means in such a way that each lighting module 20₁ and 20₂ is connected to a respective electronic converter 10₁ and 10₂, i.e. powered by a respective electronic converter 10₁ and 10₂; or
b) when the sum of the supply powers *P20₁* and *P20₂* is less than a second threshold (selected on the basis of the power supply that the first electronic converter 10₁ is able to provide), the control circuit 42 drives the switching means in such a way that both lighting modules 20₁ and 20₂ are connected to a first electronic converter 10₁, i.e. powered by a first electronic converter 10₁.

In general, the switching means 40 can be configured to connect both lighting modules 20₁ and 20₂ to the first electronic converter 10₁ and/or to the second electronic converter 10₂. For example, this is more useful in the case in which the electronic converters 10₁ and 10₂ support different maximum power supply capacities or if one of the electronic converters 10₁ and 10₂ fails.

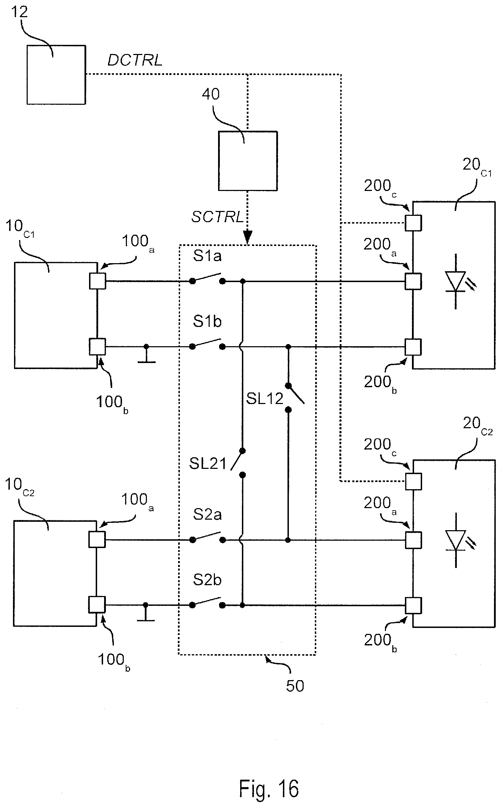

For example, Figure 16 shows a possible embodiment in which two lighting modules 20_{C1} and 20_{C2} can be connected in series to a first electronic converter 10_{C1} or to a second electronic converter 10_{C2}.

In particular, in the embodiment considered, the switching means 40 comprise:
- two switches S1a and S1b connected, respectively, between the terminals 200a and 200b of the first lighting module 20_{C1} and the terminals 100a and 100b of the first electronic converter 10_{C1};
- two switches S2a and S2b connected, respectively, between the terminals 200a and 200b of the second lighting module 20_{C2} and the terminals 100a and 100b of the second electronic converter 10_{C2};
- an electronic switch SL12 connected between the terminal 200b of the first lighting module 20_{C1} and the terminal 200a of the second lighting module 20_{C2}; and
- an electronic switch SL21 connected between the terminal 200a of the first lighting module 20_{C1} and the terminal 200b of the second lighting module 20_{C2}.

In general, even in this case, some of the switches may be part of a multiplexer.

Accordingly, in the embodiment considered, the switching means 40 are configured to selectively connect:
- each lighting module 20_{C1} and 20_{C2} to a respective electronic converter 10_{C1} and 10_{C2} (S1a, S1b, S2a, S2b closed and SL12, SL21 open);
- connect both lighting modules 20_{C1} and 20_{C2} to the first electronic converter 10_{C1} (S1a, S2b, SL12 closed, S1b, S2a, SL21 open); or
- connect both lighting modules 20_{C1} and 20_{C2} to the second electronic converter 10_{C2} (S1b, S2a, SL21 closed, S1a, S2b, SL12 open).

In the embodiment considered, the lighting modules 20 are then connected in series. However, as described above, in various embodiments, the lighting modules 20 can be connected in parallel.

In general, the lighting system may also comprise a greater number of lighting modules 20 and/or electronic converters 10.

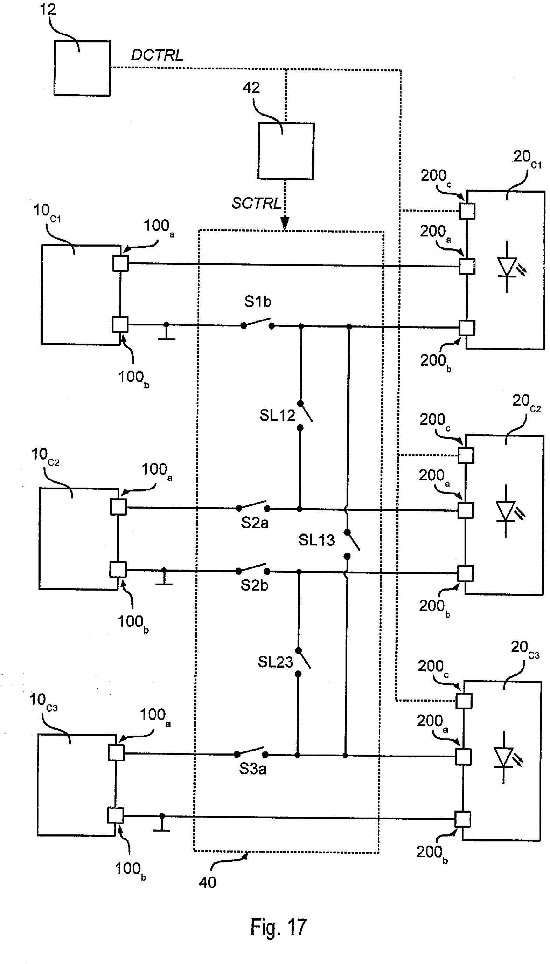

For example, Figure 17 shows an embodiment, in which the lighting system comprises the lighting modules 20_{C1}, 20_{C2} and 20_{C3} and three electronic converters 10_{C1}, 10_{C2} and 10_{C3}.

In particular, in the embodiment considered, the switching means 40 comprise:
- a switch S1b connected between the terminal 200b of the first lighting module 20_{C1} and the terminal 100b of the first electronic converter 10_{C1}, in which the terminal 200a of the first lighting module 20_{C1} is connected (for example, directly) to the terminal 100a of the first electronic converter 10_{C1};
- two switches S2a and S2b connected, respectively, between the terminals 200a and 200b of the second lighting module 20_{C2} and the terminals 100a and 100b of the second electronic converter 10_{C2};
- a switch S3a connected between the terminal 200a of the third lighting module 20_{C3} and the terminal 100a of the third electronic converter 10_{C3}, wherein the terminal 200b of the third lighting 20_{C3} module is connected (for example, directly) to the terminal 100b of the third electronic converter 10_{C3};
- an electronic switch SL12 connected between the terminal 200b of the first lighting module 20_{C1} and the terminal 200a of the second lighting module 20_{C2};
- an electronic switch SL13 connected between the terminal 200b of the first lighting module 20_{C1} and the terminal 200a of the third lighting module 20_{C3}; and
- an electronic switch SL23 connected between the terminal 200b of the second lighting module 20_{C2} and the terminal 200a of the third lighting module 20_{C3}.

The control circuit 42 can drive the electronic switches S1b, S2a, S2b, S3a, SL12, SL13 and SL23 at least with the following switching states:

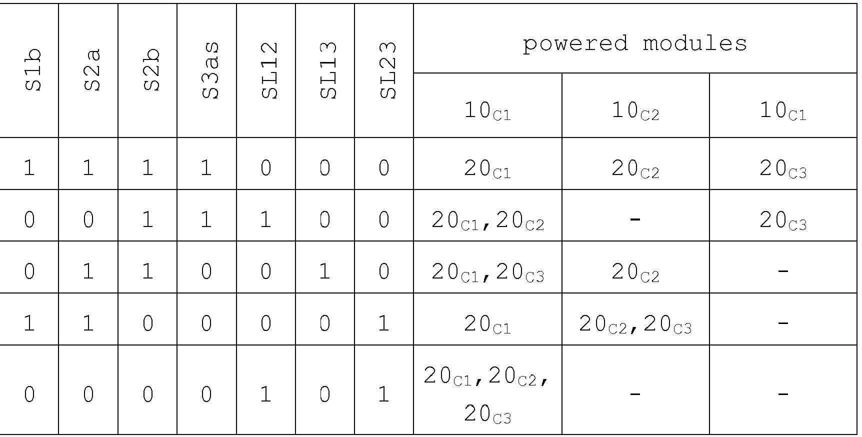

The electronic switches can also be used for other purposes, for example - in cases of malfunction - to disconnect one or more of the lighting modules 20_{C1}, 20_{C2} and 20_{C3}, for example, to disconnect the lighting module 20_{C1}:

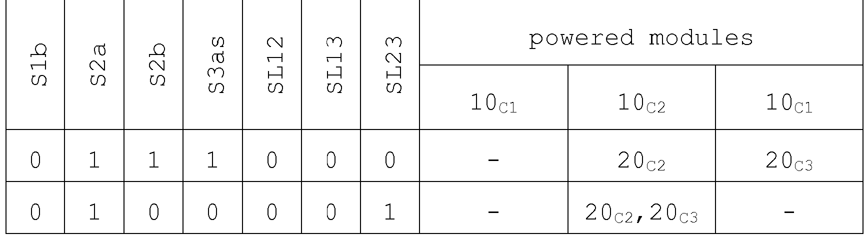

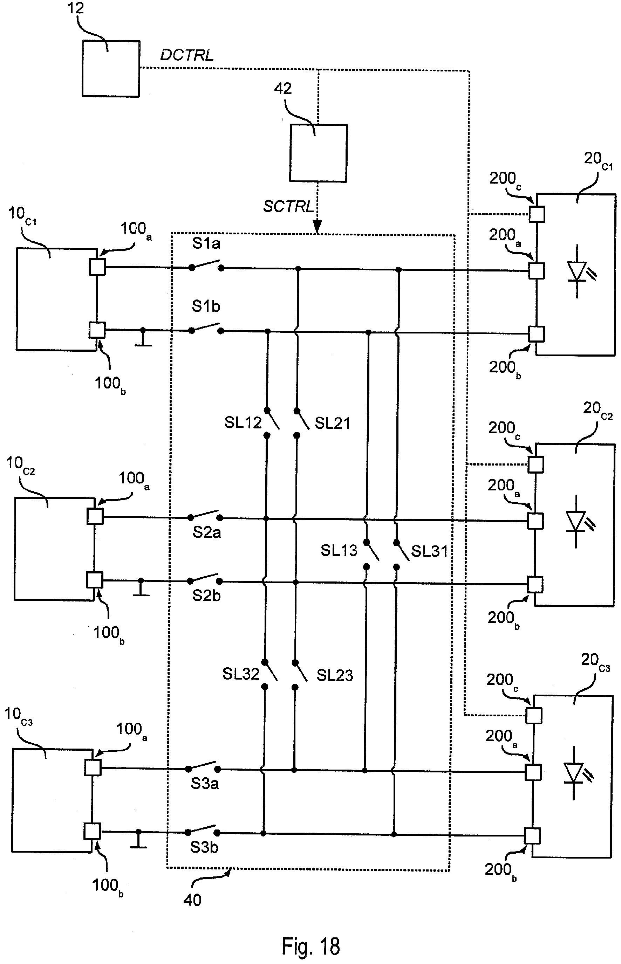

Figure 18 shows that additional electronic switches can also be added, such as, for example:
- a switch S1a connected between the terminal 200a of the first lighting module 20_{C1} and the terminal 100a of the first electronic converter 10_{C1}; and/or
- a switch S3b connected between the terminal 200b of the third lighting module 20_{C3} and the terminal 100b of the third electronic converter 10_{C3}, and/or
- an electronic switch SL21 connected between the terminal 200a of the first lighting module 20_{C1} and the terminal 200b of the second lighting module 20_{C2}; and/or
- an electronic switch SL31 connected between the terminal 200a of the first lighting module 20_{C1} and the terminal 200b of the third lighting module 20_{C3}; and/or
- an electronic switch SL32 connected between the terminal 200a of the second lighting module 20_{C2} and the terminal 200b of the third lighting module 20_{C3}.

In fact, the electronic switches SL12, SL13 and SL23 (and possibly the switches SL21, SL31 and SL32) represent an interconnection network between the lighting modules 20 and the electronic switches S1b, S2a, S2b and S3a (and possibly the switches S1a and S3b) represent switching means for connecting the electronic converters 10 to the lighting modules 20 as connected through the interconnection network.

In general, the interconnection network can, therefore, be implemented according to the specific application.

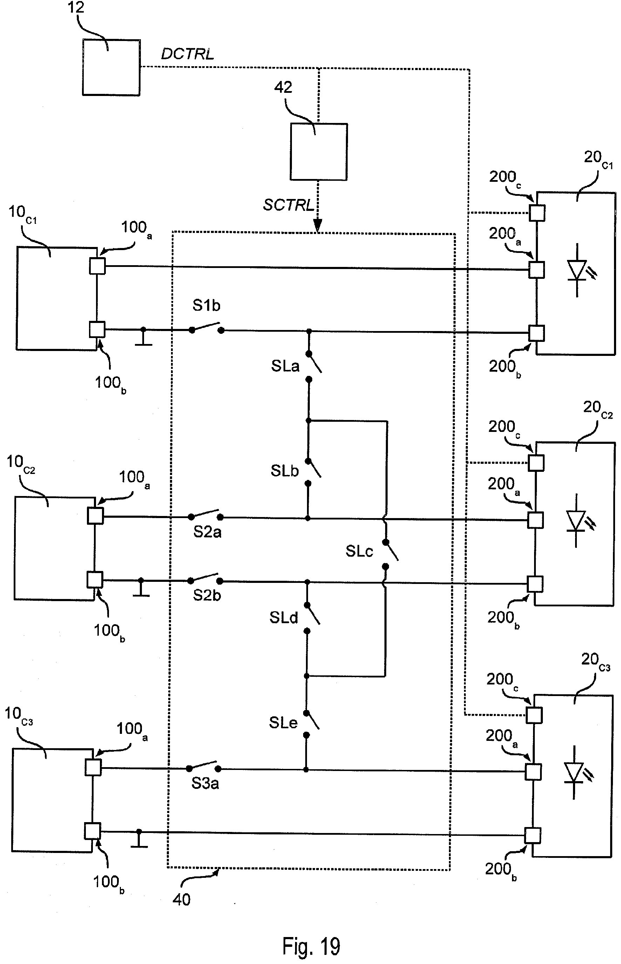

For example, Figure 19 shows an embodiment, in which the interconnection network is made with five electronic switches:
- two electronic switches SLa and SLb connected in series between the terminal 200b of the first lighting module 20_{C1} and the terminal 200a of the second lighting module 20_{C2};
- two electronic switches SLd and SLe connected in series between the terminal 200b of the second lighting module 20_{C2} and the terminal 200a of the third lighting module 20_{C3}; and
- an electronic switch SLc connected between the intermediate point between the switches SLa and SLb and the intermediate point between the switches SLd and SLe.

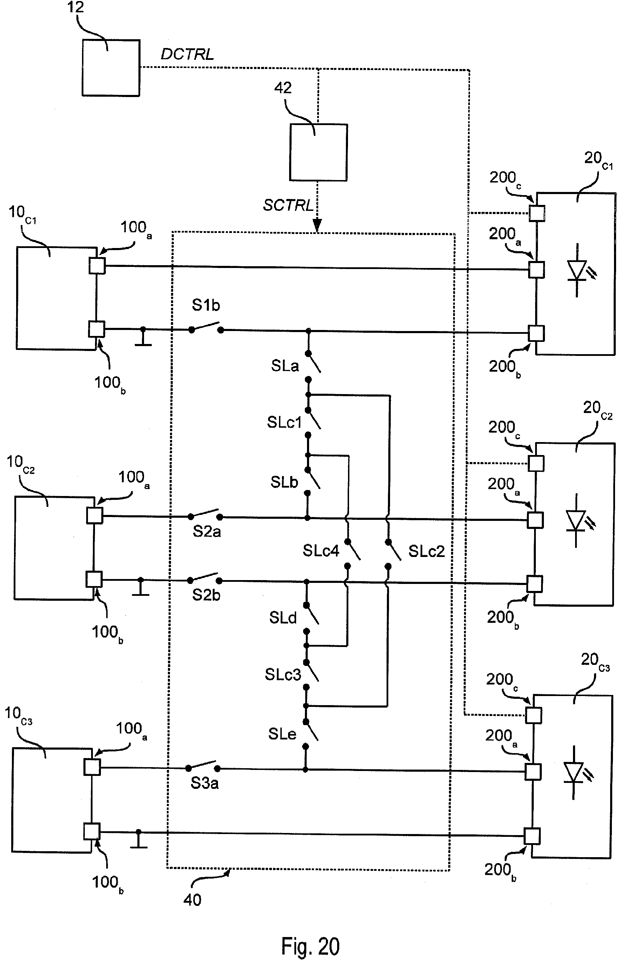

Instead, Figure 20 shows an embodiment, in which the interconnection network is made with eight electronic switches:
- three electronic switches Sla, SLc1 and SLb connected in series between the terminal 200b of the first lighting module 20_{C1} and the terminal 200a of the second lighting module 20_{C2};
- three electronic switches SLd, SLc3 and SLe connected in series between the terminal 200b of the second lighting module 20_{C2} and the terminal 200a of the third lighting module 20_{C3};
- an electronic switch SLc2 connected between the intermediate point between the switches SLa and SLc1 and the intermediate point between the switches SLc3 and SLe; and
- an electronic switch SLc4 connected between the intermediate point between the switches SLc1 and SLb and the intermediate point between the switches SLd and SLc3.

Therefore, in general, the interconnection means 40 can be produced by meshed point-to-point topologies, in which each element of the network is directly connected to each other (for example, as in the circuit of Figure 18), but also by means of star-type topologies, in which the branches of the network converge on the same point/subnetwork and are then sorted. In fact, by increasing the number of nodes in the network, a star topology may be more convenient.

Therefore, in the solutions described herein, the lighting system comprises at least two electronic converters 10 and at least two lighting modules 20, such as, for example LED modules.

The system further comprises switching means 40 configured for connecting the lighting modules 20 to the electronic converters 10. In particular, the switching means 40 are configured to allow at least two switching states.
a) a first switching state, in which at least one lighting module 20 is connected to each electronic converter 10, i.e. each of the electronic converters 10 powers one or more respective lighting modules 20; and
b) a second switching state, in which one or more of the electronic converters 10 is disconnected, i.e. does not power any lighting module 20, and the lighting module(s) 20 connected previously to said electronic converter 10 (i.e. during the first switching state) are connected to and thus powered by the other electronic converters 20 of the system.

The lighting system further comprises a control circuit 42 configured to drive the switching of the switching means 40.

In particular, in various embodiments, the control circuit monitors the sum of the supply powers (average and/or instantaneous) required by the lighting modules and activates the first or second switching state according to the sum of the supply powers. In particular, in various embodiments, the control circuit 42 controls the switching means 40 so as to:
- activate the first switching state when the sum of the supply powers is greater than a first threshold, and
- activate the second switching state when the sum of the supply powers is less than a second threshold, which is equal to or lower than the first threshold.

In general, the switching means can also support further switching states and the control circuit 42 can be configured to select one of the switching states according to the power requirements required by the lighting modules 20.

In various embodiments, the electronic converters 10 may have substantially the same characteristics. In particular, in the case in which the electronic converters 10 are current generators, these generators substantially provide the same regulated current *iₒᵤₜ*. Similarly, in the case in which the electronic converters 10 are voltage generators, these generators provide substantially the same regulated voltage *Vₒᵤₜ*.

In various embodiments, the lighting modules 20 are also of the same type, i.e. modules configured to be supplied with the same regulated voltage or the same regulated current. In general, the maximum power supply of the lighting modules 20 may also be different from one another, for example, the lighting modules 20 may comprise a different number of LEDs L.

However, in various embodiments, the lighting modules 20 have the same characteristics, in particular, with reference to the maximum power supply. For example, in various embodiments, each lighting module 20 comprises the same number of LEDs L. In this case, even the electronic converters can be configured to provide the same maximum power supply.

Of course, without prejudice to the principle of the invention, the details of construction and the embodiments may vary, even significantly, with respect to those illustrated here, purely by way of non-limiting example, without departing from the scope of the invention as defined by the attached claims.

**LIST OF REFERENCE SIGNS**

| | |
|---|---|
| electronic converter | 10 |
| terminal | 100 |
| control circuit | 12 |
| lighting module | 20 |
| terminal | 200 |
| LED string | 22 |
| regulation means | 24 |
| electronic switch | 240 |
| electronic switch | 242 |
| control circuit | 26 |
| rectifier circuit | 30 |
| electronic converter | 32 |
| switching means | 40 |
| multiplexer | 402 |
| control circuit | 42 |
| capacitor | C |
| dimming control signal | *DCTRL* |
| regulated current | *iₒᵤₜ* |
| LED | L |
| control signal | *SCTRL* |
| switch | S |
| switch | SW |
| regulated voltage | *V_{BUS}* |
| regulated voltage | *Vₒᵤₜ* |

## Claims

1. A lighting system comprising a plurality of electronic converters (10) comprising a first (10₁) and one or more second (10₂, 10₃) electronic converters and a plurality of lighting modules (20) comprising a first (20₁) and one or more second (20₂, 20₃) lighting modules, wherein the lighting system comprises:
- switching means (40) configured to connect said lighting modules (20) to said electronic converters (10),
**characterized in that** said switching means (40) are configured to permit at least two switching states:
- a first switching state, wherein said first lighting module (20₁) is connected to said first electronic converter (10₁) and a respective second lighting module (20₂, 20₃) is connected to each second electronic converter (10₂, 10₃), and
- a second switching state, wherein said one or more second electronic converters (10₂, 10₃) are disconnected from the plurality of lighting modules and said first (20₁) and said one or more second (20₂, 20₃) lighting modules are connected to said first electronic converter (10₁); and
wherein the lighting system comprises a control circuit (42) configured for:
- detecting one or more signals indicative of the supply powers requested by the lighting modules (20) of said plurality of lighting modules (20), and
- driving the switching of the switching means (40) for activating said first or said second switching state as a function of said detected one or more signals.

2. The lighting system according to Claim 1, wherein said control circuit (42) is configured for:
- determining the sum of the supply powers requested by the lighting modules (20),
- in case said sum is greater than a first threshold, activating the first switching state, and
- in case said sum is smaller than a second threshold, activating the second switching state.

3. The system according to Claim 1 or Claim 2, wherein one or more lighting modules (20) of said plurality of lighting modules (20) comprise regulation means (24) configured to vary the supply powers requested by the respective lighting module (20) as a function of one or more dimming control signals *(DCTRL).*

4. The system according to Claim 3, wherein said detecting one or more signals indicative of the supply powers requested by the lighting modules (20) of said plurality of lighting modules (20) comprises monitoring said one or more dimming control signals *(DCTRL).*

5. The system according to Claim 3 or Claim 4, wherein:
- said regulation means (24) are configured to regulate the amplitude of the current flowing through the respective lighting module (20) as a function of said one or more dimming control signals (*DCTRL*); or
- said regulation means (24) are configured to modulate, as a function of one or more dimming control signals (*DCTRL*), the current flowing through the respective lighting module (20) with a pulse width modulation, and wherein, at least during said second switching state, said modulations are synchronized in order to sequentially switch on the lighting modules (20) connected to each electronic converter (10).

6. The system according to any of the previous claims, wherein:
- said electronic converters (10) of said plurality of electronic converters (10) provide a regulated voltage and said switching means (40) are configured to:
- in said second switching state, connect said first lighting module (20₁) and said second lighting module (20₂) in parallel to said first electronic converter (10₁); or
- said electronic converters (10) of said plurality of electronic converters (10) provide a regulated current and said switching means (40) are configured to:
- in said second switching state, connect said first lighting module (20₁) and said second lighting module (20₂) in series to said first electronic converter (10₁).

7. The system according to any one of claims 1 to 5, wherein each electronic converter (10) comprises a positive output terminal (100a) and a negative output terminal (100b) and each lighting module (20) comprises a positive input terminal (200a) and a negative input terminal (200b), wherein said switching means (40) comprise:
- a first electronic switch (SW1) connected between the positive terminal (200a) of said first lighting module (20₁) and the positive terminal (200a) of said second lighting module (20₂), a second electronic switch (SW2) connected between the positive terminal (100a) of said second electronic converter (10₂) and the positive terminal (200a) of said second lighting module (20₂), wherein the positive terminal (200a) of said first lighting module (20₁) is connected to the positive terminal (100a) of said first electronic converter (10₁) and the negative terminal (200b) of said second lighting module (20₂) is connected to the negative terminal (100b) of said second electronic converter (10₂); or
- a first electronic switch (S1b) connected between the negative terminal (100b) of said first electronic converter (10₁) and the negative terminal (200b) of said first lighting module (20₁), a second electronic switch (S2a) connected between the positive terminal (100a) of said second electronic converter (10₂) and the positive terminal (200a) of said second lighting module (20₂), and a third electronic switch (SL12) connected between the negative terminal (200b) of said first lighting module (20₁) and the positive terminal (200a) of said second lighting module (20₂), wherein the positive terminal (200a) of said first lighting module (20₁) is connected to the positive terminal (100a) of said first electronic converter (10₁) and the negative terminal (200b) of said second lighting module (20₂) is connected to the negative terminal (100b) of said second electronic converter (10₂).

8. A method of operating a lighting system according to any of the previous claims, comprising the steps of:
- detecting one or more signals indicative of the supply powers requested by the lighting modules (20) of said plurality of lighting modules (20), and
- driving the switching of the switching means (40) for activating said first or said second switching state as a function of said detected one or more signals.

## Patentansprüche

1. Beleuchtungssystem mit mehreren elektronischen Wandlern (10) mit einem ersten (10₁) und einem oder mehreren zweiten (10₂, 10₃) elektronischen Wandlern und einer Vielzahl von Beleuchtungsmodulen (20) mit einem ersten (20₁) und einem oder mehreren zweiten (20₂, 20₃) Beleuchtungsmodulen, wobei das Beleuchtungssystem umfasst:
- Schaltmittel (40), die so konfiguriert sind, dass sie die Beleuchtungsmodule (20) mit den elektronischen Wandlern (10) verbinden,
**dadurch gekennzeichnet, dass** die Schaltmittel (40) so konfiguriert sind, dass sie mindestens zwei Schaltzustände zulassen:
- einen ersten Schaltzustand, bei dem das erste Beleuchtungsmodul (20₁) mit dem ersten elektronischen Wandler (10₁) verbunden ist und ein jeweiliges zweites Beleuchtungsmodul (20₂, 20₃) mit jedem zweiten elektronischen Wandler (10₂, 10₃) verbunden ist, und
- einen zweiten Schaltzustand, wobei der eine oder die mehreren zweiten elektronischen Wandler (10₂, 10₃) von der Vielzahl von Beleuchtungsmodulen getrennt sind und der erste (20₁) und der eine oder die mehreren zweiten (20₂, 20₃) Beleuchtungsmodule mit dem ersten elektronischen Wandler (10₁) verbunden sind; und
wobei das Beleuchtungssystem eine Steuerschaltung (42) umfasst, die konfiguriert ist zum:
- Erfassen eines oder mehrerer Signale, die die von den Beleuchtungsmodulen (20) der Vielzahl von Beleuchtungsmodulen (20) angeforderten Versorgungsleistungen anzeigen, und
- Ansteuerung des Schaltens der Schaltmittel (40) zum Aktivieren des ersten oder des zweiten Schaltzustands in Abhängigkeit von dem erfassten einen oder mehreren Signalen.

2. Beleuchtungssystem nach Anspruch 1, bei dem die Steuerschaltung (42) konfiguriert ist zum:
- Erfassen der Summe der von den Beleuchtungsmodulen (20) angeforderten Versorgungsleistungen,
- Aktivieren des ersten Schaltungszustands falls die Summe größer als ein erster Schwellenwert ist, und
- Aktivieren des zweiten Schaltungszustands falls die Summe kleiner als ein zweiter Schwellenwert ist.

3. System nach Anspruch 1 oder Anspruch 2, bei dem ein oder mehrere Beleuchtungsmodule (20) der Vielzahl von Beleuchtungsmodulen (20) Regulierungsmittel (24) umfassen, die so konfiguriert sind, dass sie die von dem jeweiligen Beleuchtungsmodul (20) angeforderten Versorgungsleistungen in Abhängigkeit von einem oder mehreren Dimm-Steuersignalen (DCTRL) variieren.

4. System nach Anspruch 3, wobei das Erfassen eines oder mehrerer Signale, die die von den Beleuchtungsmodulen (20) der Vielzahl von Beleuchtungsmodulen (20) angeforderten Versorgungsleistungen anzeigen, das Überwachen des einen oder der mehreren Dimm-Steuersignale (DCTRL) umfasst.

5. System nach Anspruch 3 oder Anspruch 4, wobei:
- die Regulierungsmittel (24) so konfiguriert sind, dass sie die Amplitude des durch das jeweilige Beleuchtungsmodul (20) fließenden Stroms in Abhängigkeit von dem einen oder den mehreren Dimm-Steuersignalen (DCTRL) regulieren; oder
- die Regulierungsmittel (24) so konfiguriert sind, dass sie in Abhängigkeit von einem oder mehreren Dimm-Steuersignalen (DCTRL) den durch das jeweilige Beleuchtungsmodul (20) fließenden Strom mit einer Pulsbreitenmodulation modulieren, und wobei zumindest während des zweiten Schaltzustands die Modulationen synchronisiert sind, um die mit jedem elektronischen Wandler (10) verbundenen Beleuchtungsmodule (20) sequentiell zu schalten.

6. System nach einem der vorhergehenden Ansprüche, wobei:
- die elektronischen Wandler (10) der Vielzahl von elektronischen Wandlern (10) eine geregelte Spannung liefern und die Schaltmittel (40) so konfiguriert sind, um:
- in dem zweiten Schaltzustand das erste Beleuchtungsmodul (20₁) und das zweite Beleuchtungsmodul (20₂) parallel mit dem ersten elektronischen Wandler (10₁) zu verbinden; oder
- die elektronischen Wandler (10) der Vielzahl von elektronischen Wandlern (10) einen geregelten Strom liefern und die Schaltmittel (40) so konfiguriert sind, um
- in dem zweiten Schaltzustand das erste Beleuchtungsmodul (20₁) und das zweite Beleuchtungsmodul (20₂) in Reihe mit dem ersten elektronischen Wandler (10₁) zu verbinden.

7. System nach einem der Ansprüche 1 bis 5, wobei jeder elektronische Wandler (10) einen positiven Ausgangsanschluss (100a) und einen negativen Ausgangsanschluss (100b) aufweist und jedes Beleuchtungsmodul (20) einen positiven Eingangsanschluss (200a) und einen negativen Eingangsanschluss (200b) aufweist, wobei die Schaltmittel (40) aufweisen:
- einen ersten elektronischen Schalter (SW1), der zwischen den positiven Anschluss (200a) des ersten Beleuchtungsmoduls (20₁) und den positiven Anschluss (200a) des zweiten Beleuchtungsmoduls (20₂) geschaltet ist, einen zweiten elektronischen Schalter (SW2), der zwischen den positiven Anschluss (100a) des zweiten elektronischen Wandlers (10₂) und den positiven Anschluss (200a) des zweiten Beleuchtungsmoduls (20₂) geschaltet ist, wobei der positive Anschluss (200a) des ersten Beleuchtungsmoduls (20₁) mit dem positiven Anschluss (100a) des ersten elektronischen Wandlers (10₁) verbunden ist und der negative Anschluss (200b) des zweiten Beleuchtungsmoduls (20₂) mit dem negativen Anschluss (100b) des zweiten elektronischen Wandlers (10₂) verbunden ist; oder
- einen ersten elektronischen Schalter (S1b), der zwischen den negativen Anschluss (100b) des ersten elektronischen Wandlers (10₁) und den negativen Anschluss (200b) des ersten Beleuchtungsmoduls (20₁) geschaltet ist, einen zweiten elektronischen Schalter (S2a), der zwischen den positiven Anschluss (100a) des zweiten elektronischen Wandlers (10₂) und den positiven Anschluss (200a) des zweiten Beleuchtungsmoduls (20₂) geschaltet ist, und einen dritten elektronischen Schalter (SL12), der zwischen den negativen Anschluss (200b) des ersten Beleuchtungsmoduls (20₁) und den positiven Anschluss (200a) des zweiten Beleuchtungsmoduls (20₂) geschaltet ist, wobei der positive Anschluss (200a) des ersten Beleuchtungsmoduls (20₁) mit dem positiven Anschluss (100a) des ersten elektronischen Wandlers (10₁) verbunden ist und der negative Anschluss (200b) des zweiten Beleuchtungsmoduls (20₂) mit dem negativen Anschluss (100b) des zweiten elektronischen Wandlers (10₂) verbunden ist.

8. Verfahren zum Betreiben eines Beleuchtungssystems gemäß einem der vorhergehenden Ansprüche, das die folgenden Schritte umfasst:
- Erfassen eines oder mehrerer Signale, die die von den Beleuchtungsmodulen (20) der Vielzahl von Beleuchtungsmodulen (20) angeforderten Versorgungsleistungen anzeigen, und
- Ansteuerung des Schaltens der Schaltmittel (40) zum Aktivieren des ersten oder des zweiten Schaltzustands in Abhängigkeit von dem erfassten einen oder mehreren Signalen.

## Revendications

1. Système d'éclairage comprenant une pluralité de convertisseurs électroniques (10) comprenant un premier (10₁) et un ou plusieurs deuxièmes (10₂, 10₃) convertisseurs électroniques et une pluralité de modules d'éclairage (20) comprenant un premier (20₁) et un ou plusieurs deuxièmes (20₂, 20₃) modules d'éclairage, le système d'éclairage comprenant :
- des moyens de commutation (40) configurés pour connecter lesdits modules d'éclairage (20) auxdits convertisseurs électroniques (10),
**caractérisé en ce que** lesdits moyens de commutation (40) sont configurés pour permettre au moins deux états de commutation :
- un premier état de commutation, dans lequel ledit premier module d'éclairage (20₁) est connecté audit premier convertisseur électronique (10₁) et un deuxième module d'éclairage respectif (20₂, 20₃) est connecté à chaque deuxième convertisseur électronique (10₂, 10₃), et
- un deuxième état de commutation, dans lequel lesdits un ou plusieurs deuxièmes convertisseurs électroniques (10₂, 10₃) sont déconnectés de la pluralité de modules d'éclairage et ledit premier (20₁) et lesdits un ou plusieurs deuxièmes (20₂, 20₃) modules d'éclairage sont connectés audit premier convertisseur électronique (10₁) ; et
le système d'éclairage comprenant un circuit de commande (42) configuré pour :
- détecter un ou plusieurs signaux indicatifs des puissances électriques requises par les modules d'éclairage (20) de ladite pluralité de modules d'éclairage (20), et
- entraîner la commutation des moyens de commutation (40) pour activer ledit premier ou ledit deuxième état de commutation en fonction desdits un ou plusieurs signaux détectés.

2. Système d'éclairage selon la revendication 1, dans lequel ledit circuit de commande (42) est configuré pour :
- déterminer la somme des puissances électriques requises par les modules d'éclairage (20),
- dans le cas où ladite somme est supérieure à un premier seuil, activer le premier état de commutation, et
- dans le cas où ladite somme est inférieure à un deuxième seuil, activer le deuxième état de commutation.

3. Système selon la revendication 1 ou la revendication 2, dans lequel un ou plusieurs modules d'éclairage (20) de ladite pluralité de modules d'éclairage (20) comprennent des moyens de régulation (24) configurés pour faire varier les puissances électriques requises par le module d'éclairage (20) respectif en fonction d'un ou plusieurs signaux de commande de gradation (DCTRL).

4. Système selon la revendication 3, dans lequel ladite détection d'un ou plusieurs signaux indicatifs des puissances électriques requises par les modules d'éclairage (20) de ladite pluralité de modules d'éclairage (20) comprend la surveillance desdits un ou plusieurs signaux de commande de gradation (DCTRL).

5. Système selon la revendication 3 ou la revendication 4, dans lequel :
- lesdits moyens de régulation (24) sont configurés pour réguler l'amplitude du courant circulant à travers le module d'éclairage (20) respectif en fonction desdits un ou plusieurs signaux de commande de gradation (DCTRL) ; ou
- lesdits moyens de régulation (24) sont configurés pour moduler, en fonction d'un ou plusieurs signaux de commande de gradation (DCTRL), le courant circulant à travers le module d'éclairage (20) respectif avec une modulation d'impulsions en durée, et dans lequel, au moins pendant ledit deuxième état de commutation, lesdites modulations sont synchronisées afin d'activer séquentiellement les modules d'éclairage (20) connectés à chaque convertisseur électronique (10).

6. Système selon l'une quelconque des revendications précédentes, dans lequel :
- lesdits convertisseurs électroniques (10) de ladite pluralité de convertisseurs électroniques (10) fournissent une tension régulée et lesdits moyens de commutation (40) sont configurés pour :
- dans ledit deuxième état de commutation, connecter ledit premier module d'éclairage (20₁) et ledit deuxième module d'éclairage (20₂) en parallèle audit premier convertisseur électronique (10₁) ; ou
- lesdits convertisseurs électroniques (10) de ladite pluralité de convertisseurs électroniques (10) fournissent un courant régulé et lesdits moyens de commutation (40) sont configurés pour :
- dans ledit deuxième état de commutation, connecter ledit premier module d'éclairage (20₁) et ledit deuxième module d'éclairage (20₂) en série audit premier convertisseur électronique (10₁).

7. Système selon l'une quelconque des revendications 1 à 5, dans lequel chaque convertisseur électronique (10) comprend une borne de sortie positive (100a) et une borne de sortie négative (100b) et chaque module d'éclairage (20) comprend une borne d'entrée positive (200a) et une borne d'entrée négative (200b), dans lequel lesdits moyens de commutation (40) comprennent :
- un premier commutateur électronique (SW1) connecté entre la borne positive (200a) dudit premier module d'éclairage (20₁) et la borne positive (200a) dudit deuxième module d'éclairage (20₂), un deuxième commutateur électronique (SW2) connecté entre la borne positive (100a) dudit deuxième convertisseur électronique (10₂) et la borne positive (200a) dudit deuxième module d'éclairage (20₂), dans lequel la borne positive (200a) dudit premier module d'éclairage (20₁) est connectée à la borne positive (100a) dudit premier convertisseur électronique (10₁) et la borne négative (200b) dudit deuxième module d'éclairage (20₂) est connectée à la borne négative (100b) dudit deuxième convertisseur électronique (10₂) ; ou
- un premier commutateur électronique (S1b) connecté entre la borne négative (100b) dudit premier convertisseur électronique (10₁) et la borne négative (200b) dudit premier module d'éclairage (20₁), un deuxième commutateur électronique (S2a) connecté entre la borne positive (100a) dudit deuxième convertisseur électronique (10₂) et la borne positive (200a) dudit deuxième module d'éclairage (20₂), et un troisième commutateur électronique (SL12) connecté entre la borne négative (200b) dudit premier module d'éclairage (20₁) et la borne positive (200a) dudit deuxième module d'éclairage (20₂), dans lequel la borne positive (200a) dudit premier module d'éclairage (20₁) est connectée à la borne positive (100a) dudit premier convertisseur électronique (10₁) et la borne négative (200b) dudit deuxième module d'éclairage (20₂) est connectée à la borne négative (100b) dudit deuxième convertisseur électronique (10₂).

8. Procédé de fonctionnement d'un système d'éclairage selon l'une quelconque des revendications précédentes, comprenant les étapes de :
- détection d'un ou plusieurs signaux indicatifs des puissances électriques requises par les modules d'éclairage (20) de ladite pluralité de modules d'éclairage (20), et
- entraînement de la commutation des moyens de commutation (40) pour activer ledit premier ou ledit deuxième état de commutation en fonction desdits un ou plusieurs signaux détectés.
